# EUROPEAN PATENT SPECIFICATION

(11) **EP 3 865 785 B1**
(45) Date of publication and mention of the grant of the patent: **03.04.2024**
(21) Application number: 18936425.0
(22) Date of filing: 09.10.2018
(51) Int. Cl.: F25B 1/04, F04B 39/00, F16C 33/14, F16C 33/56, F25B 1/00, F04C 18/52

(54) **COMPRESSOR AND REFRIGERATION DEVICE PROVIDED WITH COMPRESSOR**
VERDICHTER UND KÜHLVORRICHTUNG MIT EINEM VERDICHTER
COMPRESSEUR ET DISPOSITIF DE RÉFRIGÉRATION COMPORTANT UN COMPRESSEUR

(43) Date of publication of application: 18.08.2021
(73) Proprietor: Mitsubishi Electric Corporation, Tokyo 100-8310 (JP)
(72) Inventor: KURITA, Shin, Tokyo 100-8310 (JP)
(74) Representative: Witte, Weller & Partner Patentanwälte mbB
(86) International application number: PCT/JP2018/037548
(87) International publication number: WO 2020/075218

(56) References cited:
- WO-A1-2018/174100
- JP-A- 2009 174 460
- JP-A- 2009 203 817
- JP-A- 2010 151 048
- JP-A- 2010 151 048
- JP-A- 2012 167 667
- JP-A- 2012 167 667
- JP-A- 2013 133 374
- JP-B2- S 534 531
- JP-B2- S 534 531

## Description

### Technical Field

The present disclosure relates to a compressor using a single-component refrigerant of HFO1234ze or a refrigerant mixture containing HFO1234ze, and to a refrigeration device including the compressor.

### Background Art

A single-component refrigerant of HFO1234ze and a refrigerant mixture containing HFO1234ze have been used in a refrigeration cycle. It is known that these refrigerants are small in influence on ozone layer depletion, and is suitable for environment preservation. Here, HFO1234ze is represented by a molecular formula of C₃HmFn (where m and n are each an integer of 1 or more and 5 or less, and relationship of m + n = 6 is established), and has one double bond in a molecular structure.

In a case where a refrigeration device performing the refrigeration cycle uses, as the refrigerant, the single-component refrigerant of HFO1234ze or the refrigerant mixture containing HFO1234ze, a resin used in a sliding part of a sliding unit inside a compressor may be deteriorated depending on a combination with a refrigerating machine oil used to lubricate the sliding unit.

Therefore, there is a technology in which the single-component refrigerant of HFO1234ze or the refrigerant mixture containing HFO1234ze is used as the refrigerant in combination with a polyol ester oil to prevent deterioration of the sliding part (for example, see Japanese Patent No. 5304531. JP 2012 167667 A discloses a rotary compressor. JP 2010 151048 A discloses a rotary type fluid machine and refrigeration cycle device. WO 2018/174100 A1 discloses a single-screw compressor. JP 2009 203817 A discloses a gate rotor and screw compressor. JP 2009 174460 A discloses a screw compressor.

Patent Literature 1: Japanese Patent No. 5304531.

### Summary of Invention

### Technical Problem

Patent Literature 1 described above discloses that the single-component refrigerant of HFO1234ze or the refrigerant mixture containing HFO1234ze is used in combination with the polyol ester oil, which makes it possible to prevent deterioration of the sliding part made of a polyamide resin. It is, however, confirmed from tests by the inventers of the present application that deterioration of the polyamide resin cannot be sufficiently prevented, and the use of the polyamide resin for the sliding part has an issue in terms of reliability.

The present disclosure is made in light of such an issue, and an object of the present disclosure is to provide a compressor that uses the single-component refrigerant of HFO1234ze or the refrigerant mixture containing HFO1234ze in combination with the polyol ester oil and can prevent deterioration of a sliding part, and to provide a refrigeration device including the compressor.

### Solution to Problem

A compressor according to an embodiment of the present disclosure is a compressor to be used in a refrigerant circuit that uses a single-component refrigerant of HFO1234ze or a refrigerant mixture containing HFO1234ze and uses a polyol ester oil as a refrigerating machine oil. The compressor includes a rotary shaft, and a sliding unit including a sliding part sliding with another part with rotation of the rotary shaft. The sliding part is made of an L-PPS resin obtained by increasing molecular weight of a PPS resin in a straight chain.

### Advantageous Effects of Invention

According to the embodiment of the present disclosure, in the compressor that uses the single-component refrigerant of HFO1234ze or the refrigerant mixture containing HFO1234ze in combination with the polyol ester oil, the sliding part is made of the L-PPS resin. Therefore, it is possible to prevent deterioration of the sliding part.

### Brief Description of Drawings

[Fig. 1] Fig. 1 is an internal plan view illustrating a main configuration of a screw compressor according to Embodiment 1 of the present disclosure.
[Fig. 2] Fig. 2 is a cross-sectional view of a portion corresponding to line A-A in Fig. 1.
[Fig. 3] Fig. 3 is a diagram illustrating a refrigerant circuit of a refrigeration device according to Embodiment 2 of the present disclosure.

### Description of Embodiments

Some embodiments of the present disclosure are described below with reference to drawings. In the drawings, the same reference numerals denote the same or equivalent components, and are used in common in an entire description of the present specification.

In the following, an embodiment in which the present disclosure is applied to a two-stage single screw compressor (hereinafter, simply referred to as screw compressor) is described.

### Embodiment 1.

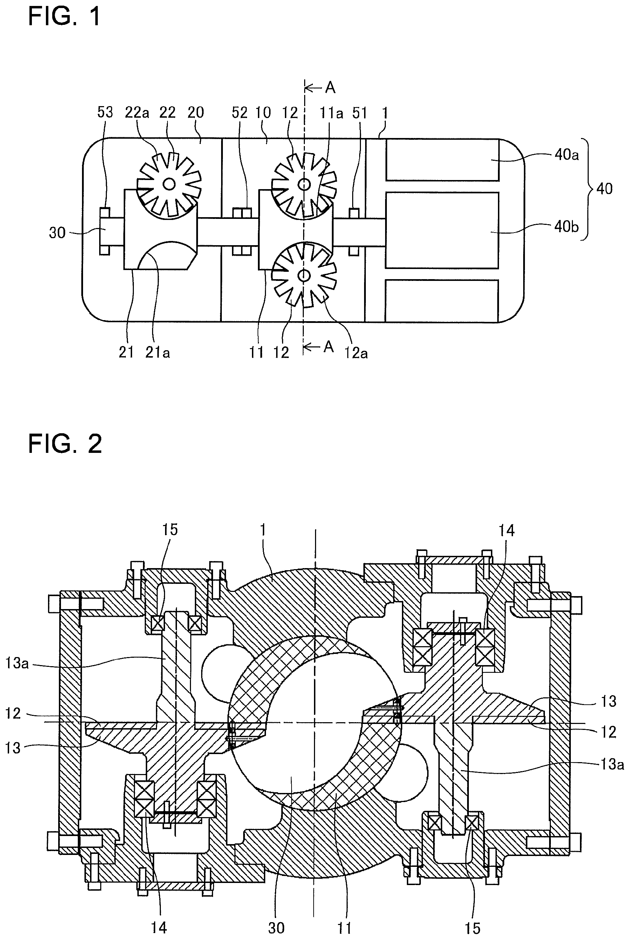

Fig. 1 is an internal plan view illustrating a main configuration of a screw compressor according to Embodiment 1 of the present disclosure. Fig. 2 is a cross-sectional view of a portion corresponding to line A-A in Fig. 1.

First, the configuration of Embodiment 1 is described. The screw compressor of Embodiment 1 includes, inside casing 1, a low-stage compression unit 10 compressing refrigerant, and a high-stage compression unit 20 further compressing the refrigerant compressed by the low-stage compression unit 10. The screw compressor further includes a rotary shaft 30 that penetrates through the low-stage compression unit 10 and the high-stage compression unit 20 and is rotatably disposed inside the casing 1, and an electric motor 40 rotatably driving the rotary shaft 30.

The low-stage compression unit 10 includes a low-stage screw rotor 11 and paired gate rotors 12. Each of the paired gate rotors 12 includes a plurality of radial teeth 12a engaging with a screw groove 11a provided in the low-stage screw rotor 11, and rotates by following rotation of the low-stage screw rotor 11. The paired gate rotors 12 are supported by paired gate rotor supports 13 as illustrated in Fig. 2. Each of the gate rotor supports 13 is disposed to have a center axis substantially perpendicular to the rotary shaft 30. The low-stage compression unit 10 compresses the refrigerant in paired compression chambers formed by the screw groove 11a, the paired gate rotors 12, and the casing 1. In the low-stage compression unit 10, the paired gate rotors 12 are disposed at positions mutually rotated by 180 degrees with the rotary shaft 30 as a center. Therefore, the paired compression chambers are formed at positions mutually rotated by 180 degrees with the rotary shaft 30 as a center.

The high-stage compression unit 20 includes a high-stage screw rotor 21 and one gate rotor 22. The gate rotor 22 includes a plurality of radial teeth 22a engaging with a screw groove 21a provided in the high-stage screw rotor 21, and rotates by following rotation of the high-stage screw rotor 21. The gate rotor 22 is supported by a gate rotor support (not illustrated), and is disposed to have a center axis substantially perpendicular to the rotary shaft 30, in a manner similar to the gate rotors 12 of the low-stage compression unit 10. The high-stage compression unit 20 compresses the refrigerant in a compression chamber formed by the screw groove 21a, the gate rotor 22, and the casing 1. Since the high-stage compression unit 20 includes one gate rotor 12, one compression chamber is formed.

The electric motor 40 includes a stator 40A that is fixed to the casing 1 while being in contact with an inside of the casing 1, and a motor rotor 40b disposed inside the stator 40a. The motor rotor 40b is fixed to the rotary shaft 30. When the electric motor 40 is driven and the rotary shaft 30 rotates, the low-stage screw rotor 11 and the high-stage screw rotor 21 rotate.

The electric motor 40 is operated by increasing/decreasing rotation speed of the rotary shaft 30 with use of an unillustrated inverter. In other words, the low-stage screw rotor 11 and the high-stage screw rotor 21 are driven at variable rotation speed by the inverter. Note that the electric motor 40 is not limited to an electric motor variable in rotation speed, and may be an electric motor fixed in rotation speed.

The screw compressor having the above-described configuration uses "a single-component refrigerant of HFO1234ze or a refrigerant mixture containing HFO1234ze" (hereinafter, collectively referred to as HFO1234ze refrigerant) as the refrigerant, and uses a polyol ester oil as a refrigerating machine oil together, and is used by being incorporated in a refrigeration device. Here, HFO1234ze is represented by a molecular formula of C₃HmFn (where m and n are each an integer of 1 or more and 5 or less, and relationship of m + n = 6 is established), and has one double bond in a molecular structure.

Further, the screw compressor of Embodiment 1 uses an L-PPS resin for a sliding part of a sliding unit to prevent deterioration of the sliding part when the HFO1234ze refrigerant and the polyol ester oil are used in combination. The sliding unit includes, for example, a bearing unit. The bearing unit in the screw compressor is described below.

As illustrated in Fig. 1, the rotary shaft 30 is rotatably supported by a rolling bearing 51, a rolling bearing 52, and a rolling bearing 53. Further, as illustrated in Fig. 2, both ends of the rotary shaft 13a of each of the gate rotor supports 13 are rotatably supported by a rolling bearing 14 and a rolling bearing 15. Although not illustrated, both ends of a rotary shaft of the gate rotor support of the high-stage compression unit 20 are similarly supported by rolling bearings. Retainers of these rolling bearings are sliding parts, and the L-PPS resin is used as a material of all of the retainers of the rolling bearings in Embodiment 1. The L-PPS resin is a resin material that has a structure in which a molecular chain in polyphenylene sulfide (PPS) is increased in molecular weight to a straight chain, and has improved strength as compared with PPS.

Using the L-PPS resin for the sliding part in the above-described manner makes it possible to prevent deterioration of the sliding part when the HFO1234ze refrigerant and the polyol ester oil are used in combination. Further, the L-PPS resin is higher in use temperature zone than a polyamide resin. Therefore, using the L-PPS resin as the material of the sliding part in the compressor is advantageous to heat generation caused by lubrication failure or the like.

Next, operation of the screw compressor according to Embodiment 1 is described.

The electric motor 40 driving the screw compressor is activated in response to electrical input from the unillustrated inverter. When the electric motor 40 is activated, the rotary shaft 30 rotates, and the low-stage screw rotor 11 and the high-stage screw rotor 21 rotate through the rotary shaft 30. When the low-stage screw rotor 11 rotates, the paired gate rotors 12 rotate. In addition, when the high-stage screw rotor 21 rotates, the gate rotor 22 rotates.

In the low-stage compression unit 10, the teeth 12a of the gate rotors 12 relatively move inside the screw groove 21a of the high-stage screw rotor 21. As a result, in the low-stage compression unit 10, a suction process of suctioning the refrigerant into the compression chambers, a compression process of compressing the refrigerant inside the compression chambers, and a discharge process of discharging the refrigerant compressed inside the compression chambers are sequentially repeated. The refrigerant compressed in the low-stage compression unit 10 and then discharged is suctioned into the high-stage compression unit 20 and is further compressed.

In the high-stage compression unit 20, the teeth 12a of the gate rotor 12 relatively move inside the screw groove 21a of the high-stage screw rotor 21. As a result, in the high-stage compression unit 20, a suction process of suctioning the refrigerant into the compression chamber, a compression process of compressing the refrigerant inside the compression chamber, and a discharge process of discharging the refrigerant compressed inside the compression chamber are sequentially repeated. The refrigerant compressed in the high-stage compression unit 20 is discharged to outside of the screw compressor.

In the above-described operation of the screw compressor, a gas load by gas compression action of the low-stage compression unit 10 and the high-stage compression unit 20 is supported by the rolling bearings. Further, in the screw compressor, the refrigerating machine oil is suctioned together with the refrigerant into the low-stage compression unit 10 and the high-stage compression unit 20, and the rolling bearings are lubricated by the refrigerating machine oil. At this time, since the retainers of the respective rolling bearings are made of the L-PPS resin as described above, it is possible to prevent deterioration when the HFO1234ze refrigerant and the polyol ester oil are used in combination.

As described above, according to Embodiment 1, in the screw compressor that uses the HFO1234ze refrigerant as the refrigerant and uses the polyol ester oil as the refrigerating machine oil, the retainers of the rolling bearings as the sliding parts are made of the L-PPS resin. This makes it possible to prevent deterioration of the sliding parts. In other words, in the screw compressor that uses the HFO1234ze refrigerant and the polyol ester oil in combination, strength degradation impairing reliability does not occur, and stable operation is performable.

In the above description, the example in which each of the rolling bearings serves as the sliding unit, and each of the retainers of the rolling bearings serves as the sliding part made of the L-PPS resin has been described; however, the sliding part is not limited thereto. The sliding part is a part sliding with the other part with rotation of the rotary shaft 30, and for example, the gate rotor is also included in the sliding part. The gate rotor corresponds to the sliding part because the gate rotor rotates with rotation of the rotary shaft 30 and slides while the teeth engage with the screw groove. The gate rotor may be made of the L-PPS resin.

### Embodiment 2.

Embodiment 2 relates to a refrigeration device including the screw compressor of Embodiment 1.

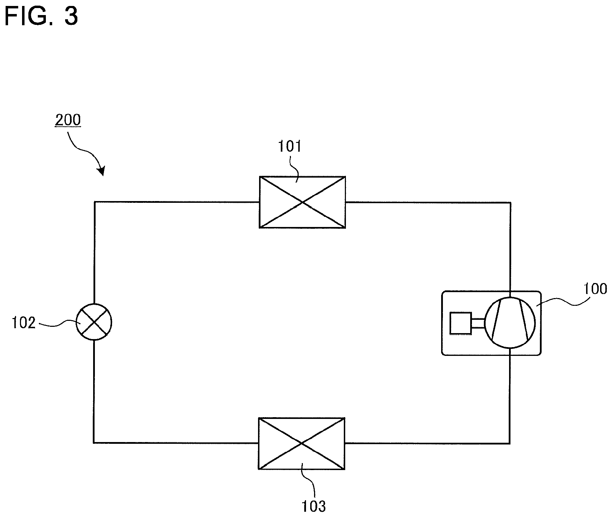

Fig. 3 is a diagram illustrating a refrigerant circuit of the refrigeration device including the screw compressor in Fig. 1.

A refrigeration device 200 includes the screw compressor 100 of Embodiment 1, a condenser 101, an expansion valve 102, and an evaporator 103, and includes a refrigerant circuit through which refrigerant circulates. The refrigeration device 200 uses the HFO1234ze refrigerant as the refrigerant. In addition, the polyol ester oil is used as a refrigerating machine oil circulating through the refrigerant circuit together with the refrigerant.

The refrigerant circuit having the above-described configuration operates in the following manner.

Gas refrigerant compressed and discharged from the screw compressor 100 flows into the condenser 101 and becomes high-pressure liquid refrigerant by exchanging heat with air passing through the condenser 101. The high-pressure liquid refrigerant then flows out from the condenser 101. The high-pressure liquid refrigerant having flowed out from the condenser 101 is decompressed by the expansion valve 102 to low-pressure two-phase gas-liquid refrigerant, and the low-pressure two-phase gas-liquid refrigerant flows into the evaporator 103. The low-pressure two-phase gas-liquid refrigerant having flowed into the evaporator 103 becomes low-pressure gas refrigerant by exchanging heat with air passing through the evaporator 103, and the low-pressure gas refrigerant is suctioned into the screw compressor 100 again.

The refrigeration device 200 having the above-described configuration can perform stable operation with high reliability because the refrigeration device 200 includes the screw compressor 100 of Embodiment 1.

The refrigeration device 200 is applicable to an air-conditioning apparatus, a refrigerator and freezer, and other apparatuses.

In Embodiment 1 and Embodiment 2 described above, the present disclosure is applied to the two-stage single screw compressor; however, the application is not limited to the two-stage single screw compressor, and the present disclosure may be applied to a single-stage single screw compressor.

### Reference Signs List

1 casing 10 low-stage compression unit 11 low-stage screw rotor
11a screw groove 12 gate rotor 12a tooth 13 gate rotor support
13a rotary shaft 14 rolling bearing 15 rolling bearing20 high-stage compression unit 21 high-stage screw rotor 21a screw groove 22 gate rotor 22a tooth 30 rotary shaft 40 electric motor 40a stator 40b motor rotor
51 rolling bearing52 rolling bearing53 rolling bearing 100 screw compressor 101 condenser 102 expansion valve 103 evaporator 200 refrigeration device

## Claims

1. A compressor to be used in a refrigerant circuit that uses a single-component refrigerant of HFO1234ze or a refrigerant mixture containing HFO1234ze and uses a polyol ester oil as a refrigerating machine oil, the compressor comprising:
a rotary shaft;
a sliding unit including a sliding part sliding with another part with rotation of the rotary shaft;
a screw rotor configured to rotate along with rotation of the rotary shaft;
a gate rotor configured to rotate along with rotation of the screw rotor,
the sliding part and the gate rotor being made of an L-PPS resin obtained by increasing molecular weight of a PPS resin in a straight chain.

2. The compressor of claim 1, wherein the sliding unit is a rolling bearing supporting the rotary shaft, and a retainer of the rolling bearing is made of the L-PPS resin.

3. A refrigeration device comprising the compressor of claim 1 or 2.

## Patentansprüche

1. Kompressor zur Verwendung in einem Kältemittelkreislauf, der ein Einkomponenten-Kältemittel aus HFO1234ze oder ein Kältemittelgemisch, das HFO1234ze enthält, verwendet und ein Polyolesteröl als Kältemaschinenöl verwendet, wobei der Kompressor aufweist:
eine Drehwelle;
eine Gleiteinheit, die ein Gleitteil aufweist, das mit einem anderen Teil bei Drehung der Drehwelle gleitet;
einen Schraubenrotor, der so ausgebildet ist, dass er sich mit der Drehung der Drehwelle mitdreht;
einen Gate-Rotor, der so ausgebildet ist, dass er sich mit der Drehung des Schraubenrotors mitdreht,
wobei der gleitende Teil und der Gate-Rotor aus einem L-PPS-Harz hergestellt sind, das durch Erhöhung des Molekulargewichts eines PPS-Harzes in einer geraden Kette erhalten wird.

2. Kompressor nach Anspruch 1, wobei die gleitende Einheit ein Wälzlager ist, das das die Drehwelle trägt, und ein Halter des Wälzlagers aus dem L-PPS-Harz besteht.

3. Kühlvorrichtung, die den Kompressor nach Anspruch 1 oder 2 aufweist.

## Revendications

1. Compresseur devant être utilisé dans un circuit réfrigérant qui utilise un réfrigérant à composant unique de HFO1234ze ou un mélange de réfrigérant contenant HFO1234ze et utilise une huile d'ester de polyol comme huile de réfrigération pour machine, le compresseur comprenant :
un arbre rotatif ;
une unité coulissante comprenant une partie coulissante qui coulisse avec une autre partie avec rotation de l'arbre rotatif ;
un rotor à vis configuré pour tourner en même temps que la rotation de l'arbre rotatif ;
un rotor à ailettes configuré pour tourner en même temps que la rotation du rotor à vis,
la partie coulissante et le rotor à ailettes étant composés d'une résine L-PPS obtenue en augmentant le poids moléculaire d'une résine PPS dans une chaîne linéaire.

2. Compresseur selon la revendication 1, dans lequel l'unité coulissante est un palier à roulement soutenant l'arbre rotatif, et un dispositif de retenue du palier à roulement est composé de résine L-PPS.

3. Dispositif de réfrigération comprenant le compresseur selon la revendication 1 ou 2.
